# FASCICULE DE BREVET EUROPEEN

(11) **EP 2 965 398 B1**
(45) Date de publication et mention de la délivrance du brevet: **10.05.2017**
(21) Numéro de dépôt: 14713210.4
(22) Date de dépôt: 03.03.2014
(51) Int. Cl.: H02J 7/00, F02N 11/08, H02J 7/34, B60R 16/04

(54) **DISPOSITIF D'ALIMENTATION COMMUTE POUR LE RÉSEAU DE BORD D'UN VÉHICULE AUTOMOBILE**
SCHALTBARE SPANNUNGSVERSORGUNGSVORRICHTUNG FÜR EIN FAHRZEUGINTERNES NETZWERK
SWITCHED SUPPLY DEVICE FOR THE ON-BOARD NETWORK OF A MOTOR VEHICLE

(30) Priorité: 08.03.2013 FR 1352081
(43) Date de publication de la demande: 13.01.2016
(73) Titulaire: Peugeot Citroën Automobiles SA, 78140 Vélizy Villacoublay (FR)
(72) Inventeur: RIERA, Alexis, 78480 Verneuil sur Seine (FR); DAUNAS, Olivier, 95280 Jouy le Moutier (FR)
(74) Mandataire: Jeannin, Laurent Jean-Pierre
(86) Numéro de dépôt international: PCT/FR2014/050462
(87) Numéro de publication internationale: WO 2014/135778

(56) Documents cités:
- EP-A1- 1 424 494
- EP-A1- 2 538 068
- EP-A2- 1 686 603
- WO-A1-02/066293

## Description

L'invention trait à un dispositif d'alimentation commutée destiné à alimenter en électricité le réseau de bord d'un véhicule automobile. En particulier, l'invention concerne des véhicules automobiles équipés d'un système de redémarrage automatique, dans lesquels différents systèmes électriques ont des besoins variés en puissance électrique dépendant des phases de conduite.

Les accessoires consommateurs d'énergie électrique tendent à être de plus en plus nombreux dans les véhicules automobiles. Il s'agit par exemple des climatiseurs, des systèmes de direction assistée, ou des dispositifs d'arrêt et de redémarrage automatique des moteurs thermiques, couramment appelés systèmes « Start & Stop ». Ces derniers peuvent par exemple comprendre un alternateur réversible qui permet de redémarrer le moteur thermique et de récupérer l'énergie cinétique lorsque le véhicule est freiné. Cette énergie récupérée peut être transformée en énergique électrique qui peut être utilisée pour recharger les stockeurs électriques du véhicule.

De tels équipements, qui permettent de remettre en marche le moteur thermique, ont des besoins énergétiques élevés. Ils nécessitent une forte puissance électrique, ce qui se traduit par des courants électriques importants. Cette demande de puissance doit cependant être satisfaite sans pour autant surdimensionner les moyens d'alimentation électrique, et sans pour autant provoquer une chute de tension sur le réseau de bord, ce qui se traduirait par une perception de mauvaise qualité du véhicule, une diminution passagère du couple moteur voire même la perte des fonctions sécuritaires du véhicule tels que freinage ou éclairage extérieur.

Pour résoudre ces problèmes, il a été proposé d'ajouter une source d'énergie auxiliaire, telle qu'une deuxième batterie, connectée au réseau de bord du véhicule. Cependant, cette solution est relativement onéreuse et occupe de l'espace supplémentaire sous le capot ou dans le coffre du véhicule.

Une autre solution consiste à fournir un dispositif d'augmentation temporaire de tension en rajoutant dans le réseau de bord un second moyen de stockage d'énergie électrique, tels que des condensateurs de forte capacité (par exemple 300F). Cette solution peut être utilisée en plus de la batterie classique plomb-acide 12V pour les démarrages et redémarrages, et pour alimenter les accessoires consommateurs électriques connectés au réseau.

Le document EP 1 686 603 divulgue un dispositif d'alimentation commuté destiné à alimenter un réseau de bord électrique d'un véhicule automobile selon le préambule de la revendication 1.

Le document de brevet US 2009 050092 décrit un démarreur de moteur avec un accumulateur, une diode et un transformateur, qui sert à augmenter la tension et donc la puissance requise lors du démarrage.

Le document de brevet WO 2011 121053 décrit un réseau de bord avec deux stockeurs d'énergie électrique et un dispositif de commande associé. Le dispositif qui est décrit permet de réguler la tension délivrée au réseau de bord.

Le document de brevet FR 2896744 présente un système d'alimentation de réseau de bord de véhicule avec un élément de stockage d'énergie électrique rechargeable, qui permet de délivrer une puissance électrique en utilisant un élévateur de tension et un système de régulation de tension du réseau.

Le brevet US 2004 239181 décrit un système de régénération d'énergie électrique au freinage. En fonction du niveau de la puissance de régénération, le système alimente différents accessoires électriques connectés au réseau de bord.

Le document de brevet FR 2784517 présente un circuit d'alimentation de réseau de bord d'un véhicule avec deux niveaux de tension. La première branche du circuit est directement alimentée par un convertisseur, tandis que la seconde branche du circuit comprend un moyen d'accumulation d'énergie avec un convertisseur à niveaux de sorties multiples.

Dans les dispositifs connus, un stockeur d'énergie électrique additionnel n'est utilisé que pour remplir une seule mission. Soit le stockeur additionnel sert à augmenter la tension du réseau de bord, soit il sert à maintenir la tension du réseau de bord.

L'invention a pour objectif de proposer un dispositif et un procédé palliant au moins un des inconvénients sus mentionnés. Plus particulièrement, l'invention a pour objectif de proposer un dispositif d'alimentation commutée qui permet d'utiliser un même stockeur additionnel d'énergie électrique pour plusieurs tâches différentes. Il s'agit par exemple des tâches de démarrage, redémarrage, augmentation de tension ou maintien de la tension du réseau de bord. L'invention propose un concept d'alimentation générique pour des véhicules équipés d'un système « Stop & Start ».

L'invention a pour objet un dispositif d'alimentation commutée destiné à alimenter un réseau de bord électrique d'un véhicule automobile. Le réseau est séparé en une partie de réseau connectée en amont du dispositif, et en une partie de réseau connectée en aval du dispositif. Le dispositif est remarquable en ce qu'il comprend :
- un contrôleur destiné à commander un ensembre de commutateurs ;
- des ports d'entrée servant à connecter au moins trois stockeurs d'énergie électrique, et
- un convertisseur de puissance électrique DC/DC.

Le dispositif est en outre remarquable en ce qu'il permet d'alimenter la partie de réseau connectée en amont de manière sélective à partir du premier stockeur. En plus, le contrôleur permet de commuter sélectivement le deuxième stockeur en série avec le premier stockeur, afin d'alimenter la partie de réseau connectée en amont. Le contrôleur permet également d'alimenter la partie de réseau connectée en aval de manière sélective à partir du premier stockeur, et le contrôleur permet d'alimenter la partie de réseau connectée en aval de manière sélective à partir du deuxième ou du troisième stockeur et à travers le convertisseur DC/DC.

L'ensemble de commutateurs comprend de préférence cinq interrupteurs. Alternativement, il peut comprendre deux interrupteurs et deux inverseurs.

De préférence, le contrôleur peut permettre de charger de manière sélective au moins un stockeur connecté à partir de la partie de réseau connectée en amont.

Le convertisseur de puissance électrique DC/DC peut de préférence être un convertisseur réversible, ce qui permet d'augmenter ou de diminuer la tension en entrée.

Le contrôleur peut de manière préférée comprendre des moyens d'entrée permettant de recevoir des signaux à partir d'au moins un élément connecté au réseau de bord.

En plus, le contrôleur peut être configuré de sorte à commuter les commutateurs de manière sélective en fonction d'au moins un signal reçu.

L'invention a également pour objet un programme d'ordinateur qui comprend des instructions de code de programme. Le programme amène un processeur programmable à fonctionner comme le contrôleur du dispositif décrit selon l'invention lorsque ledit programme est exécuté par le processeur programmable.

L'invention a également pour objet un véhicule automobile comprenant un réseau électrique de bord et au moins trois stockeurs d'énergie électrique. Le véhicule est remarquable en ce que le réseau de bord comprend un dispositif d'alimentation commuté conforme à l'invention. De préférence, le véhicule peut comprendre un système de redémarrage automatique.

La structure logique de commutation du dispositif selon l'invention est indépendante des types et des capacités des stockeurs connectés au dispositif. Ceci permet de programmer le contrôleur en conformité avec les besoins d'alimentation du véhicule. La programmation se fait par exemple par chargement d'un programme informatique adéquat, qui établit une relation entre les besoins des parties de réseau lors de différentes phases de conduite, et les états des commutateurs. L'écriture de tels programmes est à la portée de l'homme de l'art. Le système proposé est générique et utilisable sur des types de véhicules différents. En outre il permet une optimisation d'utilisation des différents stockeurs connectés au dispositif, ce qui en augmente la durée de vie.

D'autres caractéristiques et avantages de la présente invention seront mieux compris à l'aide de la description et des dessins, parmi lesquels :
- la figure 1 est une représentation d'un circuit implémentant une réalisation préférée du dispositif selon l'invention ;
- la figure 2 est une représentation d'un détail d'un circuit implémentant une réalisation préférée du dispositif selon l'invention, y compris une alternative d'implémentation.

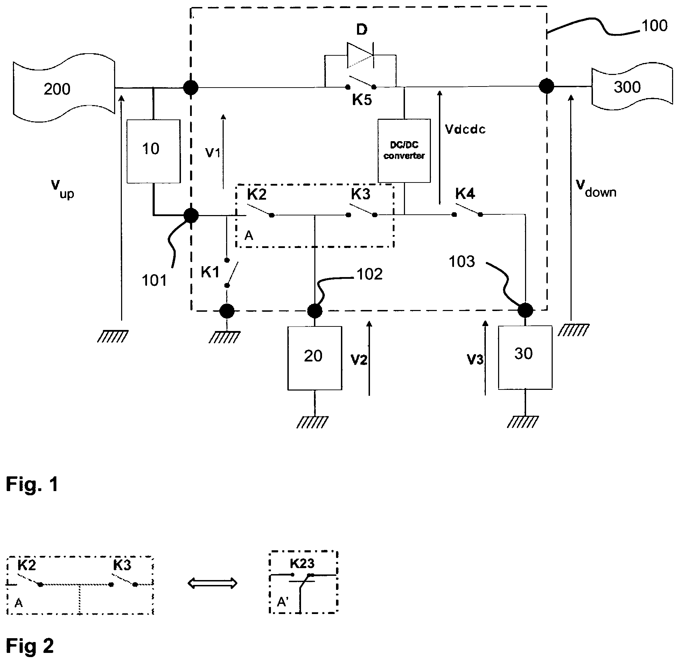

La figure 1 illustre de manière exemplaire un circuit qui réalise le dispositif 100 selon l'invention. Le dispositif est destiné à être connecté à une première portion de réseau de bord d'un véhicule 200 en amont et à une deuxième portion de réseau de bord d'un véhicule 300 en aval. Typiquement le réseau 200 comporte un générateur électrique et un générateur mécanique, qui mettent en oeuvre notamment un système de redémarrage automatique « Stop & Start ». La tension Vup est délivrée au réseau 200 par le dispositif 100. Lors des phases de démarrage ou de redémarrage, la tension Vup doit être augmentée, de façon à pouvoir délivrer la puissance électrique requise par la machine électrique pour fournir un couple mécanique suffisant au démarrage ou redémarrage du moteur.

Le réseau 300 comporte typiquement les consommateurs électriques installés dans le véhicule, par exemple le système de direction assistée ou la climatisation. Le dispositif applique la tension Vdown au réseau 300. Il est important de fournir une tension généralement constante à la partie de réseau 300, indépendamment des besoins d'énergie dans la partie de réseau 200.

Le dispositif 100 comporte des ports de connexion 101, 102, et 103 qui permettent la connexion de stockeurs d'énergie électrique 10, 20 et 30 respectivement. Dans l'exemple décrit et de façon non limitative, il sera supposé que le stockeur d'énergie 10 est une batterie automobile à 12 V connue du type plomb-acide. Les stockeurs d'énergie 20 et 30 reliés à la masse du véhicule sont de préférence des supercondensateurs. Un supercondensateur est un condensateur particulier qui permet d'obtenir une densité de puissance et une densité d'énergie intermédiaire entre les batteries et les condensateurs électrolytiques classiques. De tels éléments sont connus dans l'art et leur fonctionnement ne sera pas explicité en plus de détails dans le cadre de cette description. De manière générale, la tension V1 aux bornes du stockeur 10 est nettement plus élevée que les tensions V2 et V3 aux bornes des stockeurs 20 et 30 respectivement. De préférence la tension V3 est sensiblement plus élevée que la tension V2.

Dans la configuration de l'exemple donné, un élément contrôleur non-illustré permet de commander les interrupteurs K1, K2, K3, K4 et K5 selon les demandes de puissance électrique des parties de réseau 200 et 300. Un processeur programmable peut être utilisé afin d'implémenter l'élément contrôleur. Avantageusement, le contrôleur possède des entrées de signaux reliées à des éléments capteurs qui l'informent de l'état momentané des éléments branchés sur les deux parties de réseau 200 et 300. En fonction de l'état du réseau et de la demande ainsi recensée, le contrôleur actionne les commutateurs selon des règles prédéfinies, qui sont de préférence stockées dans une mémoire programmable à laquelle le contrôleur a un accès en lecture. Les commutateurs K1 à K5 sont avantageusement implémentés par des transistors de type MOSFET connus dans l'art. Des variantes d'implémentation seront à la portée de l'homme de l'art.

A titre d'exemple et en référence à la figure 1, plusieurs états de fonctionnement du dispositif 100 seront décrits en partant des états respectifs des commutateurs K1 à K5. Dans ce qui suit, chacun des commutateurs est dans la position ouverte, sauf indication contraire.

### - Commutateurs K1 et K5 fermés

Dans cet état, le stockeur d'énergie 10 connecté au port 101 alimente la partie réseau 200 en amont du dispositif 100. La fermeture du commutateur K5 permet également au stockeur 10 d'alimenter le réseau 300 en aval du dispositif. Le niveau de tension délivré à l'intégralité du réseau de bord du véhicule est égal à Vup = Vdown= V1. Les stockeurs 20 et 30 ne participent pas à l'alimentation du réseau de bord, et ils ne sont pas en état de recharge. Cet état correspond généralement à un état de repos du véhicule. Le fonctionnement de l'alimentation 100 dans cet état correspond à une alimentation d'un véhicule conventionnel sans système de récupération d'énergie et sans système Stop & Start.

### - Commutateurs K1, K3 et K5 fermés

Dans cet état, le premier stockeur d'énergie 10 connecté au port 101 alimente la partie réseau 200 en amont du dispositif 100. La fermeture du commutateur K5 permet également au stockeur 10 d'alimenter le réseau 300 en aval du dispositif. Le niveau de tension délivré à l'intégralité du réseau de bord du véhicule est égal à Vup = Vdown = V1. La fermeture du commutateur K3 permet de charger le deuxième stockeur d'énergie électrique 20 connecté au port 102 à travers le convertisseur DC/DC. Les stockeurs 20 et 30 ne participent pas à l'alimentation du réseau de bord. Cet état correspond généralement à un état de préparation au démarrage du véhicule.

### - Commutateurs K1, K4 et K5 fermés

Dans cet état, le premier stockeur d'énergie 10 connecté au port 101 alimente la partie réseau 200 en amont du dispositif 100. La fermeture du commutateur K5 permet également au stockeur 10 d'alimenter le réseau 300 en aval du dispositif. Le niveau de tension délivré à l'intégralité du réseau de bord du véhicule est égal à Vup = Vdown = V1. La fermeture du commutateur K4 permet de charger le troisième stockeur d'énergie électrique 30 connecté au port 103 à travers le convertisseur DC/DC. Les stockeurs 20 et 30 ne participent pas à l'alimentation du réseau de bord. Cet état correspond généralement à un état de préparation au démarrage du véhicule.

### - Commutateurs K1 et K3 fermés

Dans cet état, le premier stockeur d'énergie 10 connecté au port 101 alimente la partie réseau 200 en amont du dispositif 100. Le deuxième stockeur 20 connecté au port 102 alimente la partie de réseau 300 à travers le convertisseur DC/DC. Le convertisseur fournit la tension nominale Vdown = Vdcdc à la partie de réseau 300, en partant de la tension V2 à son entrée. Comme le commutateur K5 est ouvert, les alimentations des deux parties de réseau 200 et 300 sont découplées. Ceci permet d'éviter des chutes de tension dans le réseau 300 en réponse à une demande accrue de tension sur le réseau 200. Par ailleurs, la diode D permet au stockeur 10 de subvenir aux appels ponctuels de puissance électriques élevés de la part du réseau 300. Le niveau de tension délivré à la partie de réseau 200 est égal à Vup = V1. Cet état correspond généralement à une phase de démarrage du moteur thermique faisant partie de la partie de réseau 200. Alternativement, l'état correspond à une courte phase de repos (stop) lors de laquelle le stockeur 10 n'est pas sollicité.

### - Commutateurs K1 et K4 fermés

Dans cet état, le premier stockeur d'énergie 10 connecté au port 101 alimente la partie réseau 200 en amont du dispositif 100. Le troisième stockeur 30 connecté au port 103 alimente la partie de réseau 300 à travers le convertisseur DC/DC. Le convertisseur fournit la tension nominale Vdown = Vdcdc à la partie de réseau 300, en partant de la tension V3 à son entrée. Comme le commutateur K5 est ouvert, les alimentations des deux parties de réseau 200 et 300 sont découplées. Ceci permet d'éviter des chutes de tension dans le réseau 300 en réponse à une demande accrue de tension sur le réseau 200. Le niveau de tension délivré à la partie de réseau 200 est égal à Vup = V1. Cet état correspond généralement à une phase de démarrage du moteur thermique faisant partie de la partie de réseau 200. Alternativement, l'état correspond à une courte phase de repos (stop) lors de laquelle le stockeur 10 n'est pas sollicité. Le dispositif peut avoir recours au stockeur 30 si le stockeur 20 n'a pas un niveau de charge suffisant au moment du démarrage.

### - Commutateurs K2 et K4 fermés

Dans cet état, le deuxième stockeur d'énergie électrique 20 connecté au port 102 est commuté en série avec le premier stockeur d'énergie 10 connecté au port 101. L'assemblage en série alimente la partie réseau 200 en amont du dispositif 100. La tension appliquée à la partie réseau 200 est par conséquent élevée au niveau Vup = V1 + V2. En même temps, le troisième stockeur 30 connecté au port 103 alimente la partie de réseau 300 à travers le convertisseur DC/DC. Le convertisseur fournit la tension nominale Vdcdc à la partie de réseau 300, en partant de la tension V3 à son entrée. Comme le commutateur K5 est ouvert, les alimentations des deux parties de réseau 200 et 300 sont découplées. Ceci permet d'éviter des chutes de tension dans le réseau 300 en réponse à une demande accrue de tension sur le réseau 200. Cet état correspond généralement à une phase de démarrage du moteur thermique faisant partie de la partie de réseau 200, dans le cas où un boost de tension est requis.

Vu que les commutateurs K2 et K3 ne sont jamais fermés ensemble, ils peuvent être remplacés par un inverseur, ou commutateur bistable K23, comme indiqué par la figure 2. De même, la structure des interrupteurs K3 et K4 du circuit de la figure 1 peut être remplacé par un inverseur. De cette façon le nombre total de commutateurs du circuit proposé est réduit de cinq à quatre.

Selon l'exemple d'utilisation décrit, le stockeur 20 est utilisé soit pour assister un démarrage par une augmentation temporaire de tension, soit pour augmenter l'autonomie lors d'une phase de repos (stop). Le stockeur 10, qui correspond en général à une batterie d'accumulateurs 12 V est moins sollicité, ce qui réduit le nombre de cycles de recharges. Comme le stockeur 10 reste en général à un niveau de charge élevé, sa durée d'utilité est prolongée.

La diode D permet au stockeur 10 de compléter ponctuellement l'alimentation fournie par les stockeurs 20 ou 30 via le DC/DC. Ceci devient par exemple nécessaire dans le cas d'un appel de courant lors d'une sollicitation du système direction assistée en cas d'évitement. Le système direction assistée fait partie de la partie de réseau 300. L'appel dépasse largement les capacités du commutateur DC/DC pendant environ 2 secondes. Dans ce cas, la tension Vdown du côté du réseau 300 va chuter en-dessous de la tension V1. Lorsque la différence de potentiel atteint la tension de la jonction diode, la diode va devenir passante et la puissance électrique va venir du stockeur 10 et compléter la puissance déjà délivrée par le DC/DC.

## Revendications

1. Dispositif d'alimentation commuté (100) destiné à alimenter un réseau de bord électrique d'un véhicule automobile, le réseau étant séparé en une partie de réseau connectée en amont (200) du dispositif ayant des besoins de puissance variables, et en une partie de réseau connectée en aval (300) du dispositif ayant des besoins de puissance généralement constants, **caractérisé en ce que** le dispositif comprend
- un contrôleur destiné à commander un ensemble de commutateurs
- des ports d'entrée (101, 102, 103) servant à connecter au moins trois stockeurs d'énergie électrique (10, 20, 30);
- un convertisseur de puissance électrique DC/DC,
et en outre **caractérisé en ce que**
- le contrôleur permet d'alimenter la partie de réseau connectée en amont (200) de manière sélective à partir du premier stockeur (10);
- le contrôleur permet de commuter sélectivement le deuxième stockeur (20) en série avec le premier stockeur (10), afin d'alimenter la partie de réseau connectée en amont (200);
- le contrôleur permet d'alimenter la partie de réseau connectée en aval (300) de manière sélective à partir du premier stockeur (10), et
- le contrôleur permet d'alimenter la partie de réseau connectée en aval (300) de manière sélective à partir du deuxième (20) ou du troisième stockeur (30), et à travers le convertisseur DC/DC.

2. Dispositif selon la revendication 1, **caractérisé en ce que** l'ensemble de commutateurs comprend 5 interrupteurs.

3. Dispositif selon la revendication 1, **caractérisé en ce que** l'ensemble de commutateurs comprend deux inverseurs et deux interrupteurs.

4. Dispositif selon une quelconque des revendications 1 à 3, **caractérisé en ce que** le contrôleur permet de charger de manière sélective au moins un stockeur connecté à partir de la partie de réseau connectée en amont (200).

5. Dispositif selon une quelconque des revendications 1 à 3, **caractérisé en ce que** le convertisseur de puissance électrique DC/DC est un convertisseur réversible.

6. Dispositif selon une quelconque des revendications 1 à 4, **caractérisé en ce que** le contrôleur comprend des moyens d'entrée permettant de recevoir des signaux à partir d'au moins un élément connecté au réseau de bord.

7. Dispositif selon la revendication 6, **caractérisé en ce que** le contrôleur commute les commutateurs de manière sélective en fonction d'au moins un signal reçu.

8. Procédé de contrôle d'un dispositif d'alimentation commuté (100) destiné à alimenter un réseau de bord électrique d'un véhicule automobile, le réseau étant séparé en une partie de réseau connectée en amont (200) du dispositif ayant des besoins de puissance variables, et en une partie de réseau connectée en aval (300) du dispositif ayant des besoins de puissance généralement constants, **caractérisé en ce que** le dispositif comprend - un contrôleur destiné à commander un ensemble de commutateurs - des ports d'entrée (101, 102, 103) servant à connecter au moins trois stockeurs d'énergie électrique (10, 20, 30); - un convertisseur de puissance électrique DC/DC,et en outre **caractérisé en ce que** le procédé comprend les étapes suivantes: - alimenter la partie de réseau connectée en amont (200) de manière sélective à partir du premier stockeur (10); - commuter sélectivement le deuxième stockeur (20) en série avec le premier stockeur (10), afin d'alimenter la partie de réseau connectée en amont (200); - alimenter la partie de réseau connectée en aval (300) de manière sélective à partir du premier stockeur (10), et - alimenter la partie de réseau connectée en aval (300) de manière sélective à partir du deuxième (20) ou du troisième stockeur (30) et à travers le convertisseur DC/DC.

9. Procédé de contrôle d'un dispositif d'alimentation commuté selon la revendication 8, **caractérisé en ce que** le procédé comprend l'étape suivante: - charger de manière sélective au moins un stockeur connecté à partir de la partie de réseau connectée en amont (200).

10. Procédé de contrôle d'un dispositif d'alimentation commuté selon les revendications 8 ou 9, **caractérisé en ce que** le procédé comprend l'étape suivante: - commuter les commutateurs de manière sélective en fonction d'au moins un signal reçu.

11. Programme d'ordinateur conçu pour mettre en oeuvre les procédés selon l'une quelconques des revendications 8 à 10.

12. Véhicule automobile comprenant un réseau électrique de bord et au moins trois stockeurs d'énergie électrique, **caractérisé en ce que** le réseau de bord comprend un dispositif d'alimentation commuté selon une quelconque des revendications 1 à 7.

13. Véhicule selon la revendication 9, **caractérisé en ce que** le réseau électrique de bord comprend un système de redémarrage automatique.

## Patentansprüche

1. Schaltbare Versorgungsvorrichtung (100), die dazu bestimmt ist, ein elektrisches Bordnetzwerk eines Kraftfahrzeugs zu versorgen, wobei das Netzwerk in einen stromaufwärts angeschlossenen Netzwerkteil (200), der variable Leistungserfordernisse hat, und einen stromabwärts angeschlossenen Netzwerkteil (300) der Vorrichtung, der allgemein konstante Leistungserfordernisse hat, getrennt ist, **dadurch gekennzeichnet, dass** die Vorrichtung Folgendes umfasst
- eine Steuervorrichtung, die dazu bestimmt ist, eine Einheit von Schaltern zu steuern,
- Eingangsports (101, 102, 103), die dazu dienen, mindestens drei Speicher für elektrische Energie (10, 20, 30) anzuschließen,
- einen elektrischen DC-/DC-Leistungswandler,
und außerdem **dadurch gekennzeichnet, dass**
- es die Steuervorrichtung erlaubt, den stromaufwärts angeschlossenen Netzwerkteil (200) selektiv ausgehend von dem ersten Speicher (10) anzuschließen,
- es die Steuervorrichtung erlaubt, selektiv den zweiten Speicher (20) in Serie mit dem ersten Speicher (10) umzuschalten, um den stromaufwärts angeschlossenen Netzwerkteil (200) zu versorgen,
- es die Steuervorrichtung erlaubt, den stromabwärts angeschlossenen Netzwerkteil (300) selektiv ausgehend von dem ersten Speicher (10) anzuschließen, und
- es die Steuervorrichtung erlaubt, den stromabwärts angeschlossenen Netzwerkteil (300) selektiv ausgehend von dem zweiten (20) oder dritten Speicher (30) und durch den DC-/DC-Wandler anzuschließen.

2. Vorrichtung nach Anspruch 1, **dadurch gekennzeichnet, dass** die Einheit von Umschaltern 5 Ein-/Ausschalter umfasst.

3. Vorrichtung nach Anspruch 1, **dadurch gekennzeichnet, dass** die Einheit von Umschaltern zwei Wendeschalter und zwei Ein-/Ausschalter umfasst.

4. Vorrichtung nach einem der Ansprüche 1 bis 3, **dadurch gekennzeichnet, dass** die Steuervorrichtung das selektive Laden mindestens eines Speichers erlaubt, der ausgehend von dem stromaufwärts angeschlossenen Netzwerkteil (200) angeschlossen ist.

5. Vorrichtung nach einem der Ansprüche 1 bis 3, **dadurch gekennzeichnet, dass** der elektrische DC-/DC-Leistungswandler ein umkehrbarer Wandler ist.

6. Vorrichtung nach einem der Ansprüche 1 bis 4, **dadurch gekennzeichnet, dass** die Steuervorrichtung Eingabemittel umfasst, die es erlauben, Signale ausgehend von mindestens einem Element, das an das Bordnetzwerk angeschlossen ist, zu empfangen.

7. Vorrichtung nach Anspruch 6, **dadurch gekennzeichnet, dass** die Steuervorrichtung die Umschalter selektiv in Abhängigkeit von mindestens einem empfangenen Signal umschaltet.

8. Verfahren zum Steuern einer schaltbaren Versorgungvorrichtung (100), die dazu bestimmt ist, ein elektrisches Bordnetzwerk eines Kraftfahrzeugs zu versorgen, wobei das Netzwerk in einen stromaufwärts angeschlossenen Netzwerkteil (200) der Vorrichtung, der variable Leistungserfordernisse hat, und einen stromabwärts angeschlossenen Netzwerkteil (300) der Vorrichtung, der allgemein konstante Leistungserfordernisse hat, getrennt ist, **dadurch gekennzeichnet, dass** die Vorrichtung - eine Steuervorrichtung, die dazu bestimmt ist, eine Einheit von Umschaltern zu steuern, - Eingangsports (101, 102, 103), die dazu dienen, mindestens drei Speicher elektrischer Energie (10, 20, 30) anzuschließen, - einen elektrischen DC-/DC-Leistungsumwandler umfasst, und außerdem **dadurch gekennzeichnet, dass** das Verfahren die folgenden Schritte umfasst: - Versorgen des stromaufwärts angeschlossenen Netzwerkteils (200) selektiv ausgehend von dem ersten Speicher (10), - selektives Umschalten des zweiten Speichers (20) in Serie mit dem ersten Speicher (10), um den stromaufwärtigen angeschlossenen Netzwerkteil (200) zu versorgen, - Versorgen des stromabwärts angeschlossenen Netzwerkteils (300) selektiv ausgehend von dem ersten Speicher (10) und - Versorgen des stromabwärts angeschlossenen Netzwerkteils (300) selektiv ausgehend von dem zweiten (20) oder dritten Speicher (30) und durch den DC-/DC-Wandler.

9. Steuerverfahren einer umschaltbaren Versorgungsvorrichtung nach Anspruch 8, **dadurch gekennzeichnet, dass** das Verfahren den folgenden Schritt umfasst: - selektives Laden mindestens eines angeschlossenen Speichers ausgehend von dem stromaufwärts angeschlossenen Netzwerkteil (200).

10. Steuerverfahren einer umschaltbaren Versorgungsvorrichtung nach den Ansprüchen 8 oder 9, **dadurch gekennzeichnet, dass** das Verfahren den folgenden Schritt umfasst: - selektives Umschalten der Umschalter in Abhängigkeit von mindestens einem empfangenen Signal.

11. Computerprogramm, das konzipiert ist, um die Verfahren nach einem der Ansprüche 8 bis 10 umzusetzen.

12. Kraftfahrzeug, das ein elektrisches Bordnetzwerk und mindestens drei Speicher elektrischer Energie umfasst, **dadurch gekennzeichnet, dass** das Bordnetzwerk eine umschaltbare Versorgungsvorrichtung nach einem der Ansprüche 1 bis 7 umfasst.

13. Fahrzeug nach Anspruch 9, **dadurch gekennzeichnet, dass** das elektrische Bordnetzwerk ein automatisches Startsystem umfasst.

## Claims

1. A switched supply device (100) intended to supply an on-board electrical network of a motor vehicle, the network being separated into a network part connected upstream (200) of the device having variable power requirements, and into a network part connected downstream (300) of the device having generally constant power requirements, **characterized in that** the device includes
- a controller intended to command a set of switches
- input ports (101, 102, 103) serving to connect at least three electrical energy storage devices (10, 20, 30);
- a DC/DC electrical power converter,
and furthermore **characterized in that**
- the controller permits the network part which is connected upstream (200) to be supplied selectively from the first storage device (10),
- the controller permits the second storage device (20) to be switched selectively in series with the first storage device (10) so as to supply the network part which is connected upstream (200);
- the controller permits the network part which is connected downstream (300) to be supplied selectively from the first storage device (10) and
- the controller permits the network part which is connected downstream (300) to be supplied selectively from the second (20) or from the third (30) storage device and through the DC/DC converter.

2. The device according to Claim 1, **characterized in that** the set of switches includes 5 interrupters.

3. The device according to Claim 1, **characterized in that** the set of switches includes to inverters and two interrupters.

4. The device according to any one of Claims 1 to 3, **characterized in that** the controller permits charging in a selective manner at least one storage device which is connected from the network part connected upstream (200).

5. The device according to any one of Claims 1 to 3, **characterized in that** the DC/DC electrical power converter is a reversible converter.

6. The device according to any one of Claims 1 to 4, **characterized in that** the controller includes input means permitting signals to be received from at least one element connected to the on-board network.

7. The device according to Claim 6, **characterized in that** the controller switches the switches selectively as a function of at least one received signal.

8. A method for controlling a switched supply device (100) intended to supply an on-board electrical network of a motor vehicle, the network being separated into a network part connected upstream (200) of the device having variable power requirements, and into a network part connected downstream (300) of the device having generally constant power requirements, **characterized in that** the device includes - a controller intended to command a set of switches - input ports (101, 102, 103) serving to connect at least three electrical energy storage devices (10, 20, 30); - a DC/DC electrical power converter, and furthermore **characterized in that** the method includes the following steps: - supplying the network part which is connected upstream (200) selectively from the first storage device (10); - switching selectively the second storage device (20) in series with the first storage device (10), so as to supply the network part which is connected upstream (200); - supplying the network part which is connected downstream (300) selectively from the first storage device (10) and - supplying the network part which is connected downstream (300) selectively from the second (20) or from the third (30) storage device and through the DC/DC converter.

9. The control method of a switched supply device according to Claim 8, **characterized in that** the method includes the following step: - selectively charging at least one connected storage device from the network part connected upstream (200).

10. The control method of a switched supply device according to Claims 8 or 9, **characterized in that** the method includes the following step: - switching the switches selectively as a function of at least one received signal.

11. A computer program designed to implement the methods according to any one of Claims 8 to 10.

12. A motor vehicle including an on-board electrical network and at least three electrical energy storage devices, **characterized in that** the on-board network includes a switched supply device according to any one of Claims 1 to 7.

13. The vehicle according to Claim 9, **characterized in that** the on-board electrical network includes an automatic restarting system.
